# EUROPEAN PATENT APPLICATION

(11) **EP 1 271 000 A2**
(43) Date of publication of application: **02.01.2003**
(21) Application number: 02077069.9
(22) Date of filing: 27.05.2002
(51) Int. Cl.: F16H 25/22

(54) **Ball screw apparatus with wire coils**

(30) Priority: 19.06.2001 US 884794
(71) Applicant: Delphi Technologies, Inc., Troy, MI 48007 (US)
(72) Inventor: Green, Norbert J., Jr., Trotwood, OH 45426 (US); Drennen, David B., Bellbrook, OH 45305 (US)
(74) Representative: Denton, Michael John

(57) **Abstract**

A ball screw apparatus (10) includes a cylindrical screw shaft (20) having a spiral groove (24) in an outside peripheral surface (22), a cylindrical ball nut (80) surrounding the screw shaft (20) and having a spiral groove (84) in an inside peripheral surface (82), and a plurality of bearing balls (140) rotatably interposed the two spiral grooves (24, 84), which are aligned and spaced apart such that the bearing balls (140) are free to rotate as the ball nut (80) rotates about and moves along the screw shaft (20). One or more of the screw shaft (20) and the ball nut (80) may include a spiral wire coil (30, 90) and a coil shape retention device (40, 100). The opposed peripheral surfaces (38, 97) of adjacent coils (32, 92) of each spiral wire coil (30, 90) form the walls of one of the spiral grooves (24, 84). Each coil shape retention device (40, 100) prevents the associated spiral wire coil (30, 90) from changing shape when the ball nut (80) moves spirally relative to the screw shaft (20).

## Description

### FIELD OF THE INVENTION

The present invention pertains to a ball screw apparatus having one or more wire coils to form spiral screw grooves.

### BACKGROUND

Ball screw apparatus are in common use today on a variety of devices. Typically, a ball screw apparatus consists of a ball screw shaft having an external spiral ball nut thread, a ball screw nut having an internal spiral ball screw thread fitted over the ball screw shaft and a plurality of bearing balls rotatably interposed the external spiral ball nut thread and the internal spiral ball screw thread. The ball screw shaft may include a variety of end treatments for positioning the ball screw shaft relative to, and for interconnecting the ball screw shaft with, other machine elements. Such a known conventional ball screw apparatus is used in many applications to convert linear motion to rotary motion, and vice versa.

Ball screw apparatus are often used because of their characteristics of providing a good load-carrying capacity, both longitudinally and transversely, of the ball screw shaft, low frictional resistance to displacement of the ball screw shaft relative to the ball screw nut, accurate translational positioning of the ball screw shaft relative to the ball screw nut, and accurate axial positioning of the ball screw shaft relative to the ball screw nut as the members are relatively displaced longitudinally. Therefore, the ball screw apparatus are often used in machinery requiring accurate translational positioning between various machine elements, particularly when extreme loads are experienced.

Because of the requirements to withstand extreme loads and provide accurate translational positioning, the spiral grooves are generally machined, ground and heat treated. Such operations make conventional ball screw apparatus high in cost. Also, the number of suppliers of ball screw apparatus is limited relative to demand for such apparatus, further increasing the cost to users.

Consequently, there has been a need for a less expensive ball screw apparatus. Eliminating the machining, grinding, and heat treating operations required to manufacture the components of such a ball screw apparatus will reduce the cost. Further, providing an apparatus that is simple to manufacture will increase the number of suppliers able to provide such apparatus. It is to this end that the present invention has been developed.

### SUMMARY OF THE INVENTION

The present invention provides a ball screw apparatus having one or more wire coils to form spiral screw grooves.

An apparatus is provided which includes a cylindrical screw shaft, a cylindrical ball nut surrounding the cylindrical screw shaft and a plurality of bearing balls rotatably interposed a first spiral groove in an outside peripheral surface of the cylindrical screw shaft and a second spiral groove in an inside surface of the cylindrical ball nut. The spiral grooves are aligned and spaced apart such that the bearing balls are free to rotate as the cylindrical ball nut is rotated about the cylindrical screw shaft. The bearing balls allow relative rotation between the cylindrical screw shaft and the cylindrical ball nut just as in a conventional ball screw. As the cylindrical ball nut rotates relative to the cylindrical screw shaft, the cylindrical ball nut will move in a linear direction along the cylindrical screw shaft just as in a conventional ball nut.

In accordance with one aspect of the present invention, the cylindrical screw shaft includes a first spiral wire coil and a first coil shape retention device. The opposed outside peripheral surfaces of adjacent coils of the first spiral wire coil form the walls of the first spiral groove. In operation, the first coil shape retention device prevents the first spiral wire coil from changing shape when the ball nut moves spirally relative to the cylindrical screw shaft.

In accordance with another aspect of the present invention, the cylindrical ball nut includes a second spiral wire coil and a second coil shape retention device. The opposed inside peripheral surfaces of adjacent coils of the second spiral wire coil form the walls of the second spiral groove. In operation, the second coil shape retention device prevents the second spiral wire coil from changing shape when the ball nut moves spirally relative to the cylindrical screw shaft.

In accordance with yet a further aspect of the invention, the cylindrical screw shaft includes the first spiral wire coil and the first coil shape retention device, and the cylindrical ball nut includes the second spiral wire coil and the second coil shape retention device. A longitudinal axis of the first spiral wire coil is coincident with a longitudinal axis of the second spiral wire coil. In operation, the first coil shape retention device prevents the first spiral wire coil from changing shape, and the second coil shape retention device prevents the second spiral wire coil from changing shape, when the ball nut moves spirally relative to the cylindrical screw shaft.

Those skilled in the art will further appreciate the above-mentioned advantages and superior features of the invention together with other important aspects thereof upon reading the detailed description that follows in conjunction with the drawings.

### BRIEF DESCRIPTION OF THE DRAWINGS

FIGURE 1 is a longitudinal side elevation view of a ball screw apparatus according to an embodiment of the present invention;
FIGURE 2 is a top plan view of the apparatus shown in FIGURE 1;
FIGURE 3 is a bottom plan view of the apparatus shown in FIGURES 1 and 2;
FIGURE 4 is a section view taken along the line 4-4 of FIGURE 1;
FIGURE 4A is a longitudinal side elevation view of a first spiral wire coil according to an embodiment of the present invention;
FIGURE 4B is a longitudinal side elevation view of a second spiral wire coil according to an embodiment of the present invention;
FIGURE 4C is a detail section view taken along the line 4C-4C of FIGURE 1;
FIGURE 5 is a longitudinal side elevation view of a ball screw shaft according to an embodiment of the present invention;
FIGURE 6 is a section view taken along the line 6-6 of FIGURE 5;
FIGURE 7 is a longitudinal side elevation view of a stud shaft according to an embodiment of the present invention;
FIGURE 8 is a section view taken along the line 8-8 of FIGURE 7;
FIGURE 9 is a bottom plan view of the stud shaft shown in FIGURES 7 and 8;
FIGURE 10 is a longitudinal side elevation view of a stud shaft coil retainer according to an embodiment of the present invention;
FIGURE 11 is a top plan view of the stud shaft coil retainer shown in FIGURE 10;
FIGURE 12 is a bottom plan view of the stud shaft coil retainer shown in FIGURES 10 and 11;
FIGURE 13 is an exploded section view taken along the line 13-13 of FIGURE 10;
FIGURE 14 is a partially exploded longitudinal side elevation view of a ball nut according to an embodiment of the present invention;
FIGURE 15 is an end view of a ball nut housing taken along the line 15-15 of FIGURE 14;
FIGURE 16 is a section view taken along the line 16-16 of FIGURE 14; and
FIGURE 17 is a section view taken along the line 17-17 of FIGURE 14.

### DETAILED DESCRIPTION OF THE PREFERRED EMBODIMENTS

In the description which follows, like parts are marked throughout the specification and drawings with the same reference numerals, respectively. The drawing figures are not necessarily to scale and certain features may be shown exaggerated in scale or in generalized or schematic form in the interest of clarity and conciseness.

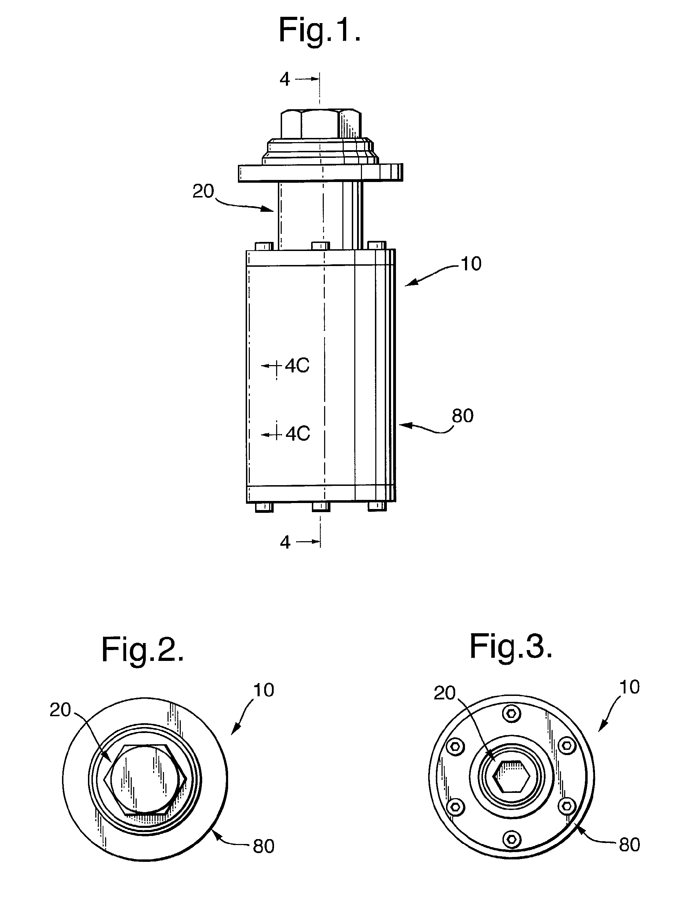

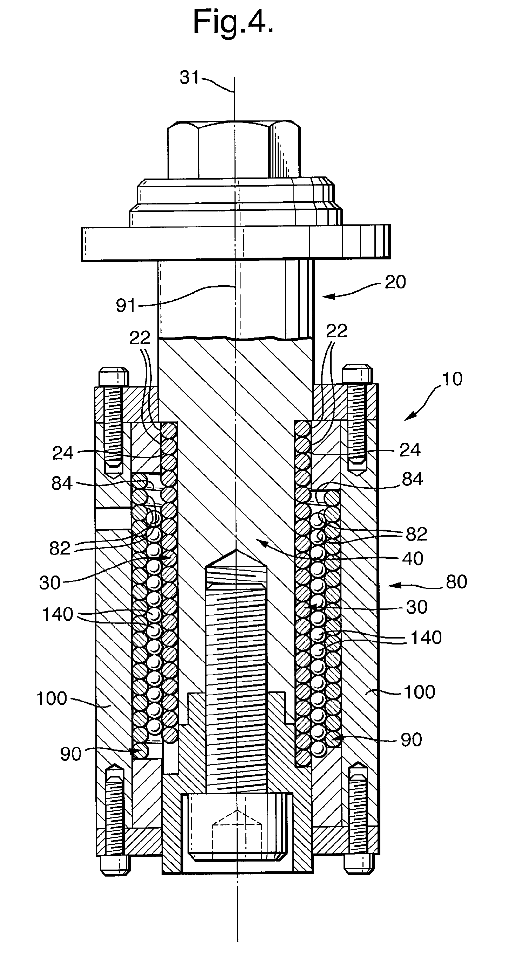

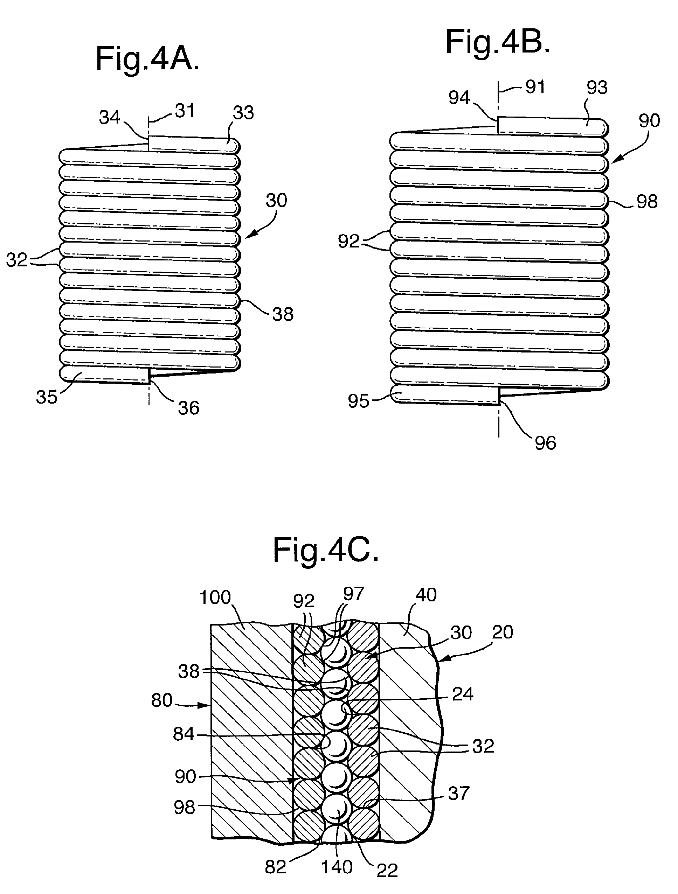

Referring to FIGURES 1, 2, 3 and 4, there is illustrated one embodiment of a ball screw apparatus having one or more wire coils to form spiral screw grooves in accordance with the invention, which apparatus is generally designated by the numeral 10. The ball screw apparatus 10 includes a cylindrical screw shaft 20, a cylindrical ball nut 80 surrounding the cylindrical screw shaft 20 and a plurality of bearing balls 140 (FIGURE 4) between an outside peripheral surface 22 of the cylindrical screw shaft 20 and an inside peripheral surface 82 of the cylindrical ball nut 80.

Referring again to FIGURE 4, the bearing balls 140 are disposed within a first spiral groove 24 in the outside peripheral surface 22 of the cylindrical screw shaft 20 and an opposed second spiral groove 84 in the inside peripheral surface 82 of the cylindrical ball nut 80. The spiral grooves 24 and 84 are aligned and spaced apart such that the bearing balls 140 are free to rotate as the cylindrical ball nut 80 is rotated about the cylindrical screw shaft 20. The bearing balls 140 allow relative rotation between the cylindrical screw shaft 20 and the cylindrical ball nut 80 just as in a conventional ball nut. As the cylindrical ball nut 80 rotates relative to the cylindrical screw shaft 20, the cylindrical ball nut 80 will move in a linear direction along the cylindrical screw shaft 20 just as in a conventional ball nut. In one embodiment of the present invention, the invention contemplates a ball screw apparatus, wherein the cylindrical screw shaft 20 includes a first spiral wire coil 30 and a first coil shape retention device 40. In another embodiment of the present invention, the invention contemplates a ball screw apparatus, wherein the cylindrical ball nut 80 includes a second spiral wire coil 90 and a second coil shape retention device 100. In a third embodiment as shown in FIGURES 4 and 4C, the invention contemplates a ball screw apparatus, wherein the cylindrical screw shaft 20 includes the first spiral wire coil 30 and the first coil shape retention device 40, and the cylindrical ball nut 80 includes the second spiral wire coil 90 and the second coil shape retention device 100. A longitudinal axis 31 of the first spiral wire coil 30 is coincident with a longitudinal axis 91 of the second spiral wire coil 90.

Referring to FIGURE 4A, the first spiral wire coil 30 has a plurality of coils 32 wound about the axis 31, including a first end coil 33 with an end 34 and a second end coil 35 with an end 36. Each coil 32 includes an inside peripheral surface 37 (FIGURE 4C) and an outside peripheral surface 38.

Referring to FIGURE 4B, the second spiral wire coil 90 has a plurality of coils 92 wound about the axis 91, including a first end coil 93 with an end 94 and a second end coil 95 with an end 96. Each coil 92 includes an inside peripheral surface 97 (FIGURE 4C) and an outside peripheral surface 98.

Referring to FIGURE 4C, opposed outside peripheral surfaces 38 of adjacent coils 32 of the first spiral wire coil 30 define opposed walls of the first spiral groove 24, and opposed inside peripheral surfaces 97 of adjacent coils 92 of the second spiral wire coil 90 define opposed walls of the second spiral groove 84. The first spiral groove 24 and the second spiral groove 84 are spaced apart and aligned such that the spiral grooves allow the bearing balls to roll freely while remaining within the spiral grooves as the cylindrical ball nut 80 rotates relative to the cylindrical screw shaft 20.

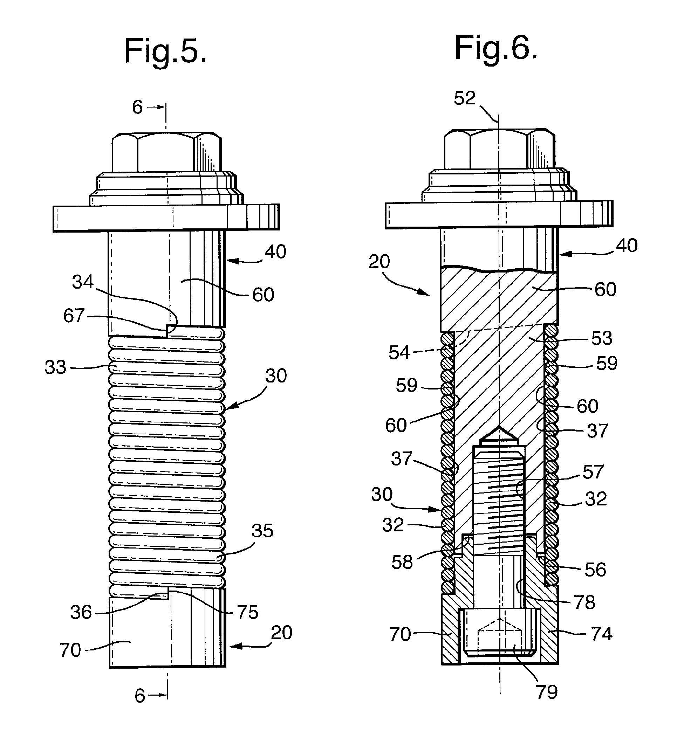

Referring to FIGURES 5 and 6, the first coil shape retention device 40 includes an enlarged diameter coil retainer portion 60 disposed on a stud shaft 50. The first coil shape retention device 40 also includes a stud shaft coil retainer 70 secured on the opposite end of the stud shaft 50 along a longitudinal axis 52 coincident with the longitudinal axis 31 of the first spiral wire coil 30 (FIGURE 4A). The stud shaft 50 includes a cylindrical shank portion 53 between ends 54 and 56, over which spiral wire coil 30 is snugly fitted. The stud shaft 50 has an axial threaded end bore 57 and a cylindrical recess 58 in the end face of the end 56. The stud shaft 50 has an outside peripheral surface 59 disposed against the innermost point of the inside peripheral surface 37 of each coil 32 of the first wire coil 30. The enlarged diameter coil retainer portion 60 is either integral with or connected to the first end 54 of the stud shaft 50. In the embodiment shown in FIGURES 5 and 6, the enlarged diameter coil retainer portion 60 is integral with the first end 54 of the stud shaft 50.

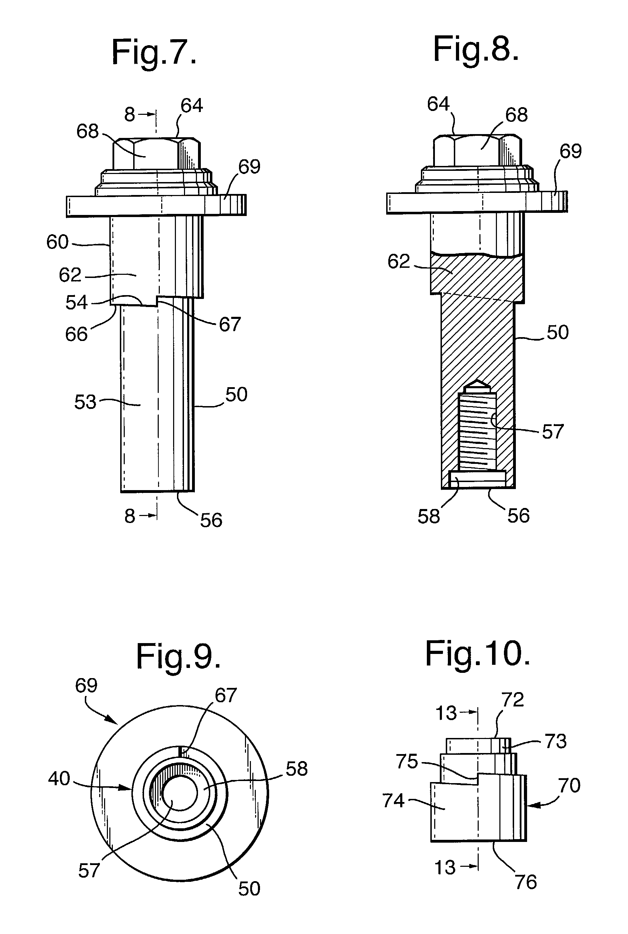

Referring to FIGURES 7, 8 and 9, the enlarged diameter coil retainer portion 60 includes an enlarged diameter coil retainer body 62, a first end 64, a second end 66, a first stud shaft coil stop 67, a stud nut 68 at the first end 64 and a stud flange 69 disposed between the stud nut 68 and the first stud shaft coil stop 67. The first stud shaft coil stop 67 is disposed against the end 34 of the first end coil 33 of the first spiral wire coil 30 (FIGURE 5). The second end 66 of the enlarged diameter coil retainer 60 is disposed against the first end 54 of the stud shaft 50.

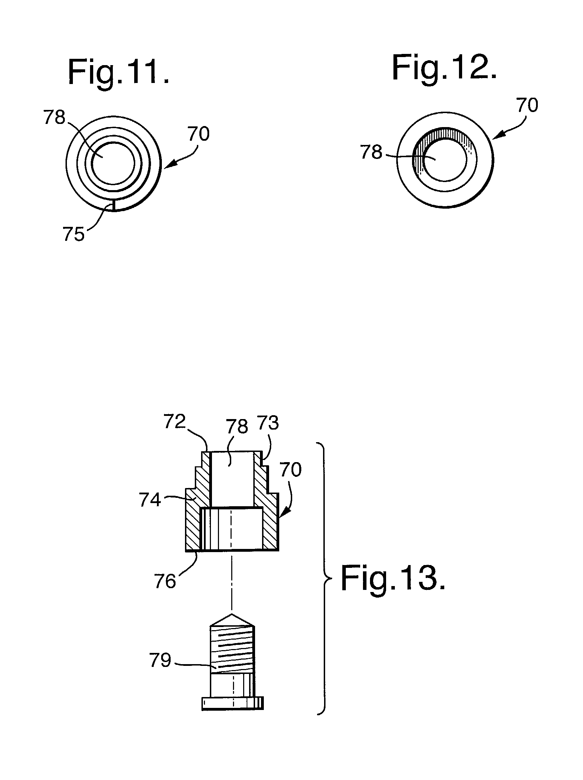

Referring again to FIGURE 6, the stud shaft coil retainer 70 is either connected to or integral with the second end 56 of the stud shaft 50. In the embodiment shown in FIGURE 6, the stud shaft coil retainer 70 is connected to the stud shaft 50. Referring to FIGURES 10, 11, 12 and 13, the stud shaft coil retainer 70 in the embodiment shown includes a first end 72, a reduced diameter end 73 at the first end 72, a stud shaft coil retainer body 74, a second stud shaft coil retainer coil stop 75, a second end 76, an axial through bore 78 and a cap screw 79. The stud shaft coil retainer 70 is connected to the second end 56 of the stud shaft 50 by the cap screw 79. The reduced diameter end 73 of the first end 72 of the stud shaft coil retainer 70 is disposed within the cylindrical recess 58 in the end face of the second end 56 of the stud shaft 50. The second stud shaft coil stop 75 is disposed against the end 36 of the second end coil 35 of the first spiral wire coil 30 (FIGURE 5).

In the embodiment shown in FIGURE 6, the cap screw 79 is insertable through the axial through bore 78 and threadable with the threaded end bore 57, allowing the stud shaft coil retainer 70 to be attached to the stud shaft 50 by inserting the cap screw 79 through the axial through bore 78 and threadably inserting the cap screw into the threaded end bore 57. The first spiral wire coil 30 is sleeved over the stud shaft 50 and retained thereon by the enlarged diameter coil retainer portion 60 and the stud shaft coil retainer 70. The distance between the first end 54 and the second end 56 of the stud shaft 50 is dimensioned to assure tight clamping of the first spiral wire coil 30 on the stud shaft 50.

In operation, the first coil shape retention device 40 prevents the first spiral wire coil 30 from changing shape when the ball nut 80 moves spirally relative to the cylindrical screw shaft 20.

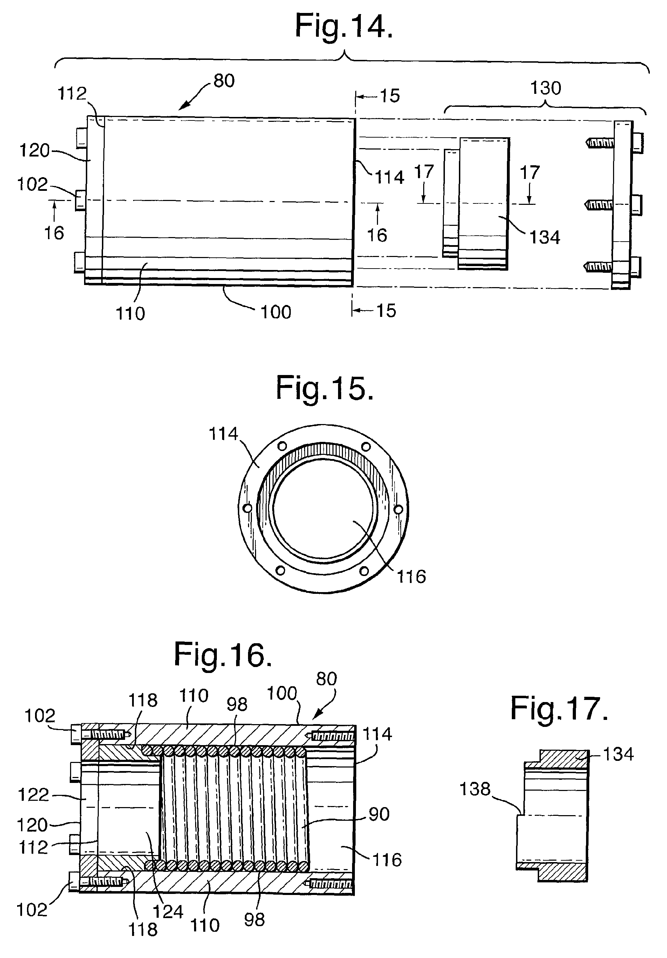

Referring to FIGURES 14, 15, 16 and 17, the cylindrical ball nut 80 includes the second spiral wire coil 90 and the second coil shape retention device 100. The second coil shape retention device 100 includes a ball nut housing 110, a first ball nut coil retainer 120 and a second ball nut coil retainer 130. The ball nut housing 110 includes a first end 112, a second end 114, a ball nut axial through bore 116 and an inside peripheral surface 118. The inside peripheral surface 118 is disposed against the outermost portion of the outside peripheral surface 98 of the second spiral wire coil 90. The first ball nut coil retainer 120 is either integral with or connected to the first end 112 of the ball nut housing 110. In the embodiment shown in FIGURES 14, 15, 16 and 17, the first ball nut coil retainer 120 is attached to the ball nut housing 110.

Referring further to FIGURES 14 and 16, the first ball nut coil retainer 120 in the embodiment shown includes a first ball nut end cap 122, a first ball nut coil retention body 124 and a first ball nut coil stop (not shown). The first ball nut coil retention body 124 is inserted into the ball nut axial through bore 116 at the first end 112 of the ball nut housing 110. The first ball nut coil stop (not shown) is disposed against the end 94 of the first end coil 93 of the second spiral wire coil 90 (FIGURE 4B). In the embodiment shown in FIGURES 14 and 16, the first ball nut end cap 122 of the first ball nut coil retainer 120 is attached to the first end 112 of the ball nut housing 110 with screws 102.

Referring further to FIGURES 14, 15, 16 and 17, the second ball nut coil retainer 130 includes a second ball nut end cap 132, a second ball nut coil retention body 134 and a second ball nut coil stop 138. The second ball nut coil retention body 134 is inserted into the ball nut axial through bore 116 at the second end 114 of the ball nut housing 110. The second ball nut coil stop 138 is disposed against the end 96 of the second end coil 95 of the second spiral wire coil 90 (FIGURE 4B). In the embodiment shown in FIGURES 14, 15, 16 and 17, the second ball nut end cap 132 of the second ball nut coil retainer 130 is attached to the second end 114 of the ball nut housing 110 with screws 102.

n operation, the second coil shape retention device 100 prevents the second spiral wire coil 30 from changing shape when the ball nut 80 moves spirally relative to the cylindrical screw shaft 20.

It will be understood that conventional engineering materials used in the manufacture of conventional ball screw apparatus will be used in the manufacture of the components of the invention. It will also be understood that conventional manufacturing methods will be used in manufacturing the components of the invention.

Although preferred embodiments of the invention have been described in detail herein, those skilled in the art will recognize that various substitutions and modifications may be made without departing from the scope and spirit of the appended claims. For example, one or more of the spiral wire coils 30 and 90 may be ground flat at either or both ends, thereby changing the design and simplifying the manufacture or one or more of the coil shape retention devices 40 and 100.

## Claims

1. A ball screw apparatus (10) comprising:
a cylindrical screw shaft (20) having a first spiral groove (24) in an outer peripheral surface (22) thereof;
a ball nut (80) having a second spiral groove (84) in an inner peripheral surface (82) thereof; and
a plurality of bearing balls (140) rotatably interposed said first spiral groove (24) and said second spiral groove (84) to allow said ball nut (80) to move spirally with respect to said screw shaft (20);
wherein at least one of said screw shaft (20) and said ball nut (80) includes a spiral wire coil (30, 90) forming one of said first and second spiral grooves (24, 84).

2. The apparatus (10) set forth in Claim 1, wherein said cylindrical screw shaft (20) comprises:
a first spiral wire coil (30) having a longitudinal axis (31) and a plurality of coils (32), each of said coils (32) having an inside peripheral surface (37) and an outside peripheral surface (38) wherein opposed outside peripheral surfaces (38) of adjacent coils (32) comprise opposed walls of said first spiral groove (24); and
a first coil shape retention device (40) for retaining said first spiral wire coil (30) on said screw shaft (20).

3. The apparatus (10) set forth in Claim 2 wherein said first coil shape retention device (40) comprises:
a stud shaft (50) having a longitudinal axis (52) coincident with said longitudinal axis (31) of said first spiral wire coil (30), a first end (54), a second end (56) and an outside peripheral surface (59) disposed against the innermost inside peripheral surface (37) of each coil (32) of said first spiral wire coil (30);
a first stud shaft coil retainer (60) either connected to or integral with said first end (54) of said stud shaft (50), said first stud shaft coil retainer (60) having a first stud shaft coil retainer body (62), a first end (64), a first stud shaft coil stop (67), said first stud shaft coil stop (67) being disposed against an end (34) of a first end coil (33) of said first spiral wire coil (30), and a second end (66) disposed against said first end (54) of said stud shaft (50); and
a second stud shaft coil retainer (70) either connected to or integral with said second end (56) of said stud shaft (50), said second stud shaft coil retainer (70) having a first end (72) disposed against said second end (56) of said stud shaft (50), a second stud shaft coil retainer body (74), a second stud shaft coil stop (75), said second stud shaft coil stop (75) being disposed against an end (36) of a second end coil (35) of said first spiral wire coil (30), and a second end (76) disposed against said second end of said stud shaft;
whereby said first coil shape retention device (40) prevents said first spiral wire coil (30) from changing shape when said ball nut (80) moves spirally relative to said cylindrical screw shaft (20).

4. The apparatus (10) set forth in Claim 3 wherein said first stud shaft coil retainer (60) further comprises a stud nut (68) at said first end (64) of said first stud shaft coil retainer (60).

5. The apparatus (10) set forth in Claim 3 wherein said first stud shaft coil retainer (60) further comprises a stud flange (69) at said first end (64) of said first stud shaft coil retainer (60).

6. The apparatus (10) set forth in Claim 3 wherein said first stud shaft coil retainer (60) further comprises:
a stud nut (68) at said first end (64) of said first stud shaft coil retainer (60); and
a stud flange (69) disposed between said stud nut (68) and said first stud shaft coil stop (67) of said first stud shaft coil retainer (60).

7. The apparatus (10) set forth in Claim 3 wherein:
said stud shaft (50) further comprises an axial threaded bore (57) at said second end (56) of said stud shaft (50); and
said second stud shaft coil retainer (70) further comprises a stud shaft axial through bore (78) and a cap screw (79);
whereby said cap screw (79) is insertable through said stud shaft axial through bore (78) and threadable with said axial threaded bore (57), allowing said second stud shaft coil retainer (70) to be attached to said stud shaft (50) by inserting said cap screw (79) through said stud shaft axial through bore (78) and threadably inserting said cap screw (79) into said axial threaded bore (57).

8. The apparatus (10) set forth in Claim 1, wherein said ball nut (80) comprises:
a second spiral wire coil (90) having a longitudinal axis (91) and a plurality of coils (92), each of said coils (92) having an outside peripheral surface (98) and an inside peripheral surface (97) wherein opposed inside peripheral surfaces (97) of adjacent coils (92) comprise opposed walls of said second spiral groove (84); and
a second coil shape retention device (100) for retaining said second spiral wire coil (90) in said ball nut (80).

9. The apparatus (10) set forth in Claim 8 wherein said second coil shape retention device (100) comprises:
a ball nut housing (110) having a first end (112), a second end (114), a longitudinal axis coincident with said longitudinal axis (91) of said second spiral wire coil (90), a ball nut axial through bore (116) and an inside peripheral surface (118) disposed against the outermost outside peripheral surface (98) of each coil (92) of said second spiral wire coil (90);
a first ball nut coil retainer (120) either connected to or integral with said first end (112) of said ball nut housing (110), said first ball nut coil retainer (120) having a first ball nut coil retention body (122, 124) and a first ball nut coil stop (not shown), said first ball nut coil stop being disposed against an end (94) of a first end coil (93) of said second spiral wire coil (90); and
a second ball nut coil retainer (130) removably connected to said second end (114) of said ball nut housing (110), said second ball nut coil retainer (130) having a second ball nut coil retention body (132, 134) and a second ball nut coil stop (138), said second ball nut coil stop (138) being disposed against an end (96) of a second end coil (95) of said second spiral wire coil (90);
whereby said second shape retention device (100) prevents said second spiral wire coil (90) from changing shape when said ball nut (80) moves spirally relative to the cylindrical screw shaft (20).

10. The apparatus (10) set forth in Claim 9 wherein said first ball nut coil retention body (122, 124) further comprises:
a first ball nut end cap (122) either connected to or integral with said first end (112) of said ball nut housing (110); and
a first ball nut end stop (124) either integral with said ball nut housing (110) or inserted into a first end of said ball nut axial through bore (116).

11. The apparatus (10) set forth in Claim 9 wherein said second ball nut coil retention body (132, 134) further comprises:
a second ball nut end cap (132) removably connected to said second end (114) of said ball nut housing (110); and
a second ball nut end stop (134) inserted into a second end of said ball nut axial through bore (116).

12. The apparatus (10) set forth in Claim 9 wherein:
said first ball nut coil retention body (122, 124) further comprises:
a first ball nut end cap (122) either connected to or integral with said first end (112) of said ball nut housing (110); and
a first ball nut end stop (124) either integral with said ball nut housing (110) or inserted into a first end of said ball nut axial through bore (116); and
said second ball nut coil retention body (132, 134) further comprises:
a second ball nut end cap (132) removably connected to said second end (114) of said ball nut housing (110); and
a second ball nut end stop (134) inserted into a second end of said ball nut axial through bore (116).

13. A ball screw apparatus (10) comprising:
a cylindrical screw shaft (20), said cylindrical screw shaft (20) including:
a first spiral wire coil (30) having a longitudinal axis (31) and a plurality of coils (32), each of said coils (32) having an inside peripheral surface (37) and an outside peripheral surface (38) wherein opposed outside peripheral surfaces (38) of adjacent coils (32) comprise opposed walls of a first spiral groove (24); and
a first coil shape retention device (40) for retaining said first spiral wire coil (30) on said screw shaft (20);
a ball nut (80), said ball nut (80) including:
a second spiral wire coil (90) having a longitudinal axis (91) and a plurality of coils (92), each of said coils (92) having an outside peripheral surface (98) and an inside peripheral surface (97) wherein opposed inside peripheral surfaces (97) of adjacent coils (92) comprise opposed walls of a second spiral groove (84); and
a second coil shape retention device (100) for retaining said second spiral wire coil (90) in said ball nut (80); and
a plurality of bearing balls (140) rotatably interposed said first spiral groove (24) and said second spiral groove (84) to allow said ball nut (80) to move spirally with respect to said screw shaft (20);
whereby said first coil shape retention device (40) prevents said first spiral wire coil (30) from changing shape when said ball nut (80) moves spirally relative to said cylindrical screw shaft (20); and
whereby said second coil shape retention device (100) prevents said second spiral wire coil (90) from changing shape when said ball nut (80) moves spirally relative to said cylindrical screw shaft (20).

14. A ball screw apparatus (10) comprising:
a cylindrical screw shaft (20), said cylindrical screw shaft (20) including:
a first spiral wire coil (30) having a longitudinal axis (31) and a plurality of coils (32), each of said coils (32) having an inside peripheral surface (37) and an outside peripheral surface (38) wherein opposed outside peripheral surfaces (38) of adjacent coils (32) comprise opposed walls of a first spiral groove (24);
a stud shaft (50) having a first end (54), a second end (56), an axial threaded bore (57) at said second end (56), a longitudinal axis (52) coincident with said longitudinal axis (31) of said first spiral wire coil (30) and an outside peripheral surface (59) disposed against the innermost inside peripheral surface (37) of each coil (32) of said first spiral wire coil (30);
a first stud shaft coil retainer (60) either connected to or integral with said first end (54) of said stud shaft (50), said first stud shaft coil retainer (60) having a first stud shaft coil retainer body (62), a first end (64), a first stud shaft coil stop (67), said first stud shaft coil stop (67) being disposed against an end (34) of a first end coil (33) of said first spiral wire coil (30), a stud nut (68) at said first end (64) of said first stud shaft coil retainer (60), a stud flange (69) disposed between said stud nut (68) and said first stud shaft coil stop (67), and a second end (66) disposed against said first end (59) of said stud shaft (50); and
a second stud shaft coil retainer (70) either connected to or integral with said second end (56) of said stud shaft (50), said second stud shaft coil retainer (70) having a second stud shaft coil retainer body (74), a second stud shaft coil stop (75), said second stud shaft coil stop (75) being disposed against an end (36) of a second end coil (35) of said first spiral wire coil (30), a coil retainer axial through bore (78) and a cap screw (99);
whereby said cap screw (79) is insertable through said coil retainer axial through bore (78) and threadable with said axial threaded bore (57), allowing said second stud shaft coil retainer (70) to be attached to said stud shaft (50) by inserting said cap screw (79) through said coil retainer axial through bore (78) and threadably inserting said cap screw (79) into said axial threaded bore (57);
a ball nut (80), said ball nut (80) including:
a second spiral wire coil (90) having a longitudinal axis (91) and a plurality of coils (92), each of said coils (92) having an outside peripheral surface (98) and an inside peripheral surface (97) wherein opposed inside peripheral surfaces (97) of adjacent coils (92) comprise opposed walls of a second spiral groove (84);
a ball nut housing (110) having a first end (112), a second end (114), a longitudinal axis coincident with said longitudinal axis (91) of said second spiral wire coil (90), an axial ball nut through bore (116) and an inside peripheral surface (118) disposed against the outermost outside peripheral surface (98) of each coil (92) of said second spiral wire coil (90);
a first ball nut coil retainer (120) having a first ball nut end cap (122) either connected to or integral with said first end (112) of said ball nut housing (110), a first ball nut end stop (124) either integral with said ball nut housing (110) or inserted into a first end of said ball nut axial through bore (116), and a first ball nut coil stop, said first ball nut coil stop being disposed against an end (94) of a first end coil (93) of the second spiral wire coil (90); and
a second ball nut coil retainer (130) having a second ball nut end cap (132) either connected to or integral with said second end (114) of said ball nut housing (110), a second ball nut end stop (134) either integral with said ball nut housing (110) or inserted into a second end of said ball nut axial through bore (116), and a second ball nut coil stop (138), said second ball nut coil stop (138) being disposed against an end (96) of a second end coil (95) of the second spiral wire coil (90); and
a plurality of bearing balls (140) rotatably interposed said first spiral groove (24) and said second spiral groove (84) to allow said ball nut (80) to move spirally with respect to said screw shaft (20);
whereby said stud shaft (50), said first stud shaft coil retainer (60) and said second stud shaft coil retainer (70) prevent said first spiral wire coil (30) from changing shape when said ball nut (80) moves spirally relative to said cylindrical screw shaft (20); and
whereby said ball nut housing (110), said first ball nut coil retainer (120) and said second ball nut coil retainer (130) prevent said second spiral wire coil (90) from changing shape when said ball nut (80) moves spirally relative to said cylindrical screw shaft (20).
